# FASCICULE DE BREVET EUROPEEN

(11) **EP 2 525 000 B1**
(45) Date de publication et mention de la délivrance du brevet: **20.08.2014**
(21) Numéro de dépôt: 12168548.1
(22) Date de dépôt: 18.05.2012
(51) Int. Cl.: E03C 1/02, F16L 5/12, E03C 1/042

(54) **Dispositif pour la fixation, sur une paroi, d'un raccord de canalisation**
Device for attaching a pipe fitting to a wall
Wandhalterung für einen Wasseranschluss

(30) Priorité: 19.05.2011 FR 1154376
(43) Date de publication de la demande: 21.11.2012
(73) Titulaire: Somatherm, 24000 Perigueux (FR)
(72) Inventeur: Fillioux, Mathieu, 24460 AGONAC (FR); Frances, Fabienne, 24000 PERIGUEUX (FR); Cambot-Courrau, Yves, 24000 PERIGUEUX (FR)
(74) Mandataire: Henrich, Christel

(56) Documents cités:
- EP-A2- 0 166 234
- DE-U1- 9 406 005
- DE-U1- 29 614 487
- FR-A1- 2 867 493
- US-A- 5 351 996

## Description

L'invention concerne un dispositif pour la fixation d'un raccord de canalisation sur une cloison creuse comprenant une paroi avant et une paroi arrière séparées par un espace adapté à recevoir une ou plusieurs conduite(s) de transport de fluide. L'invention concerne également un procédé de fixation d'un raccord de canalisation sur une cloison creuse, mis en oeuvre à l'aide d'un tel dispositif.

Le dispositif selon l'invention est particulièrement adapté pour le raccordement et le montage sur une double cloison d'une conduite d'installation sanitaire semi-rigide installée entre la paroi avant et la paroi arrière de ladite cloison.

On connaît aujourd'hui différentes méthodes pour la fixation d'un raccord de canalisation sur une cloison creuse. L'une d'elles, décrite dans le brevet EP 1 348 815 B1, consiste à utiliser une plaque support sur laquelle on fixe le raccord et qui ensuite est disposée sur la face avant de la paroi avant de la cloison. Ce système nécessite cependant la réalisation, dans la paroi avant, d'un trou de diamètre suffisant pour permettre le passage du raccord, qui affaiblit la cloison.

Une autre méthode connue consiste à disposer une base de fixation en arrière de la paroi avant, à sertir le ou les raccords de canalisation sur cette fixation, puis à refermer la cloison grâce à la paroi arrière. Cette méthode est généralement mise en oeuvre dans le cas de conduites rigides, mais elle reste fastidieuse et nécessite l'intervention simultanée de deux opérateurs, placés de chaque côté de la cloison. Un premier opérateur est placé à l'arrière de la cloison et fixe les raccords à la base de fixation. Un second opérateur réceptionne les embouts des raccords passant au travers de trous de passage aménagés à cet effet dans la paroi avant, pendant que le premier opérateur verrouille le système de fixation.

Des dispositifs pour le branchement d'un appareil sanitaire sont connus des documents FR 2 867 493 et DE 296 14 487 U1.

L'invention a pour but de fournir une nouvelle solution pour la fixation d'un raccord de canalisation sur une cloison creuse, qui permette une mise en oeuvre facile en réduisant la main d'oeuvre nécessaire et le nombre d'étapes de montage, qui assure le renforcement de la cloison au niveau du trou de passage du raccord et qui soit également adapté au cas de conduites semi-rigides.

Selon un premier aspect de l'invention, ce but est atteint avec un dispositif de fixation comprenant au moins un élément de base comportant des moyens de fixation pour sa fixation sur la paroi arrière ; au moins un élément de support comprenant des moyens d'adaptation pour le raccord de canalisation, et adapté pour être monté avec possibilité de translation par rapport à l'élément de base, l'élément de base et l'élément de support coopérant par une glissière, et pour venir en appui contre la face arrière de la paroi avant ; au moins un élément de préhension adapté pour venir se fixer au raccord de canalisation, dans le prolongement de son embouchure, de façon amovible ; et au moins un écrou de renfort adapté pour être vissé à un extrémité du raccord de canalisation qui traverse un trou de la paroi avant, et pour venir en appui contre la face avant de la paroi avant, ce par quoi la paroi avant est prise en étau entre l'élément de support et l'écrou de renfort.

Selon un exemple de réalisation, pour assurer la liaison glissière précitée, l'un parmi l'élément de base et l'élément de support comprend une première tige creuse et l'autre parmi l'élément de base et l'élément de support comprend une seconde tige adaptée à s'engager à coulissement à l'intérieur de ladite première tige.

Selon un second aspect, l'invention concerne également un raccord de canalisation comprenant un embout avant muni d'un filetage externe et d'un filetage interne, un embout arrière adapté à recevoir l'extrémité d'une conduite, et un ergot faisant saillie dans une direction opposée à son embout avant du raccord.

Le but de l'invention est également atteint avec un dispositif de fixation comprenant un tel raccord de canalisation ; et comprenant en outre au moins un élément de base comportant des moyens de fixation pour sa fixation sur la paroi arrière, et des moyens de guidage adaptés à coopérer avec l'ergot du raccord de canalisation pour former une liaison glissière ; au moins un élément de support comportant des moyens d'adaptation pour le raccord de canalisation, et adapté pour venir en appui contre la face arrière de la paroi avant ; au moins un élément de préhension adapté pour venir se fixer au raccord de canalisation, dans le prolongement de son embouchure, de façon amovible ; et au moins un écrou de renfort adapté pour être vissé à une extrémité du raccord de canalisation qui traverse un trou de la paroi avant, et pour venir en appui contre la face avant de la paroi avant, ce par quoi la paroi avant est prise en étau entre l'élément de support et l'écrou de renfort.

Avec un dispositif selon l'invention, le montage peut être réalisé depuis un seul côté de la cloison. L'élément de préhension permet le déplacement du raccord de canalisation, solidaire de la conduite d'installation sanitaire, depuis un côté de la cloison et par un unique opérateur. L'agencement prévu entre l'élément de base et l'ensemble formé par le raccord de canalisation et l'élément de support remplit la fonction d'un deuxième opérateur qui soutiendrait le raccord et guiderait son déplacement sur le côté arrière de la paroi avant.

Grâce aux dispositions de l'invention, le raccord peut facilement être déplacé entre les deux parois de la cloison et le dispositif selon l'invention peut ainsi s'adapter à des cloisons de différentes largeurs.

L'écrou de renfort permet le blocage en position du raccord de canalisation et, avec l'élément de support, la prise en étau de la paroi avant de la cloison. Après montage, l'écrou de renfort recouvre entièrement le trou de passage, de sorte qu'il n'est plus besoin de respecter un alignement parfait entre l'axe de perçage du trou de passage dans la paroi avant et le raccord de canalisation.

Par ailleurs, la cloison, affaiblie par le trou de passage du raccord de canalisation, est renforcé par l'appui de l'élément de support d'un côté de la paroi avant et de l'écrou de renfort du côté opposé.

On notera que le dispositif selon l'invention sera généralement utilisé pour le montage et le raccordement d'une conduite d'installation sanitaire sur une double cloison dont l'une seulement des deux parois, notamment la paroi arrière, est installée au moment où débute le montage.

Selon un exemple de réalisation, les moyens de fixation de l'élément de base comprennent au moins une fente oblongue destinée à recevoir une vis.

Selon un exemple, les moyens de fixation de l'élément de base comprennent des moyens adhésifs disposés sur sa face arrière.

Selon un exemple, les moyens d'adaptation comprennent des moyens de blocage en translation du raccord de canalisation par rapport à l'élément de support.

Ces moyens de blocage en translation peuvent, par exemple, comprendre des languettes élastiques radiales biseautées situées à l'arrière de l'élément de support et aptes à fléchir en coopérant avec une collerette du raccord de canalisation et à revenir dans leur position initiale pour bloquer en translation le raccord de canalisation par rapport à l'élément de support.

Selon un exemple, les moyens d'adaptation comprennent en outre des moyens de blocage en rotation du raccord de canalisation par rapport à l'élément de support.

Ces moyens de blocage en rotation peuvent par exemple comprendre au moins une nervure rectiligne adaptée pour coopérer avec un bord rectiligne du raccord de canalisation afin de bloquer le pivotement relatif entre les deux pièces.

Selon un aspect avantageux de l'invention, le dispositif comprend au moins deux éléments de base joints l'un à l'autre, par exemple par une entretoise, de façon à conserver entre eux le même écartement.

Avec les méthodes et les dispositifs de l'art antérieur, en cas de multiples raccordements (c'est-à-dire lorsque plusieurs raccords doivent être disposés l'un à côté de l'autre, par exemple dans le cas de lavabos double ou triple vasques), il est très difficile de garantir un bon positionnement relatif entre les raccords, et notamment d'assurer une bonne horizontalité et le respect d'un entraxe prédéterminé.

L'utilisation de plusieurs éléments de base reliés entre eux par une ou plusieurs entretoise(s) de largeur(s) prédéterminée(s) permet de résoudre ces problèmes. L'entraxe entre deux éléments de support adjacents et, de fait, entre les raccords de canalisation devant y être fixés, sera déterminé par la largeur de l'entretoise reliant les éléments de base correspondants.

Les éléments de support peuvent également être joints l'un à l'autre, par exemple par une entretoise, de façon à limiter le nombre de pièces et les étapes de montage.

Ces problèmes sont également résolus avec un dispositif de fixation comprenant au moins deux éléments de base et au moins une tige de raccordement adaptée à être fixée de manière amovible sur chacun des deux éléments de base, la tige et les éléments de base formant alors un ensemble solidaire dans lequel l'écartement entre les éléments de base est prédéterminé.

L'invention a également pour objet un procédé de fixation d'au moins un raccord de canalisation sur une cloison creuse comprenant une paroi avant et une paroi arrière, au moyen d'un dispositif tel que défini précédemment, **caractérisé en ce qu'**il comprend les étapes suivantes :
a) on fixe l'élément de base sur la paroi arrière,
b) on monte sur l'élément de base l'ensemble formé par le raccord de canalisation et l'élément de support,
c) on fixe l'élément de préhension sur le raccord de canalisation, dans le prolongement de son embouchure,
d) on installe la paroi avant;
e) on visse l'écrou de renfort sur l'extrémité du raccord de canalisation qui traverse le trou de la paroi avant, jusqu'à ce que la paroi avant soit prise en étau entre l'élément de support et l'écrou de renfort.

Dans la succession d'étapes ci-dessus, l'ordre des étapes b) et c) peut être modifié indifféremment.

Selon un exemple de mise en oeuvre, on met en place la paroi arrière préalablement à l'étape a).

Selon un exemple, après l'étape b) et préalablement à l'étape d), on met en place la paroi avant.

Selon un exemple, préalablement à la mise en place de la paroi avant, on réalise dans ladite paroi un trou de passage pour le raccord de canalisation.

Selon un exemple, après l'étape e), l'élément de préhension est désengagé du raccord de canalisation et retiré.

Selon un exemple, au cours de l'étape b), dans cet ordre ou inversement, on fait coopérer l'ergot du raccord de canalisation avec les moyens de guidage de l'élément de base et on fixe le raccord de canalisation sur l'élément de support.

Selon un exemple, au cours de l'étape b), dans cet ordre ou inversement, on monte l'élément de support sur l'élément de base avec possibilité de translation, et on fixe le raccord de canalisation sur l'élément de support.

Plusieurs modes ou exemples de réalisation et de mise en oeuvre sont décrits dans le présent exposé. Toutefois, sauf précision contraire, les caractéristiques décrites en relation avec un mode ou un exemple de réalisation ou de mise en oeuvre quelconque peuvent être appliquées à un autre mode ou exemple.

L'invention et ses avantages apparaîtront mieux à la lecture de la description détaillée qui suit, d'exemples de réalisation de l'invention donnés à titre illustratif et non limitatif. Cette description fait référence aux figures annexées, sur lesquelles :
- La figure 1 est une vue en perspective, éclatée, d'un dispositif de fixation selon un premier mode de réalisation de la présente invention ;
- Les figures 2A à 2F sont des vues en coupe du dispositif de la figure 1, à différentes étapes de montage ;
- La figure 3 est une vue en perspective, éclatée, d'un dispositif de fixation selon un deuxième mode de réalisation de l'invention ;
- La figure 4 est une vue en perspective, partiellement arrachée, d'une cloison creuse sur laquelle a été fixé le dispositif de la figure 4 ;
- La figure 5A est une vue en perspective, éclatée, d'un dispositif de fixation selon un troisième mode de réalisation de la présente invention ;
- La figure 5B est une vue de détail de la collerette du raccord de canalisation de la figure 5A;
- La figure 6A montre le dispositif de fixation de la figure 5A, de l'arrière ;
- La figure 6B est une vue de détail des moyens d'adaptation du raccord de canalisation, prévu sur l'élément de support de la figure 6A ;
- La figure 7 est une vue illustrant une mise en oeuvre avantageuse du dispositif des figures 5A à B6.

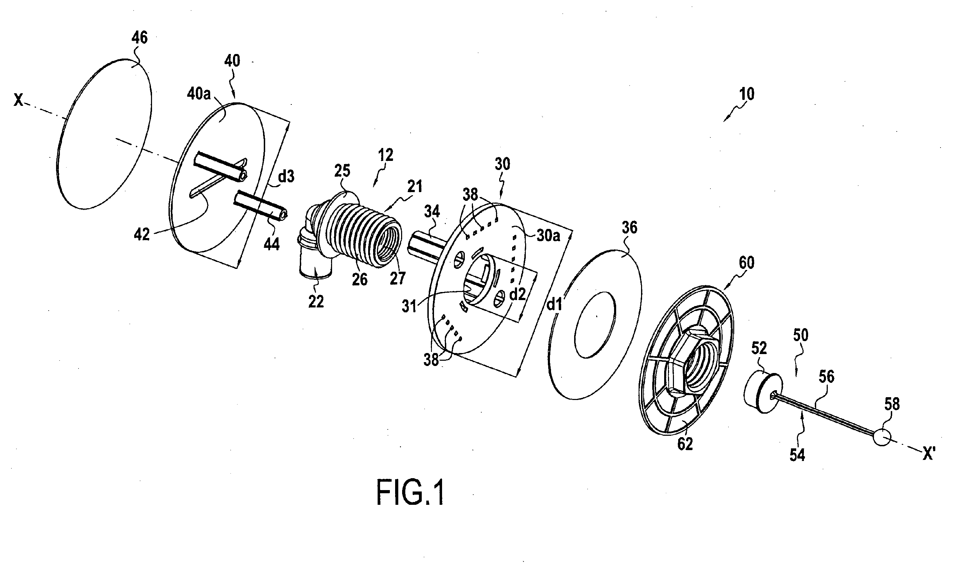

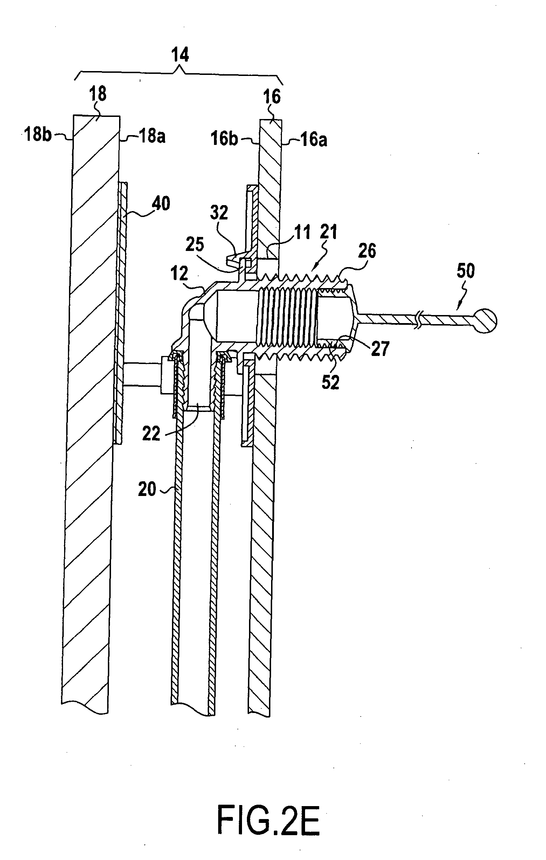

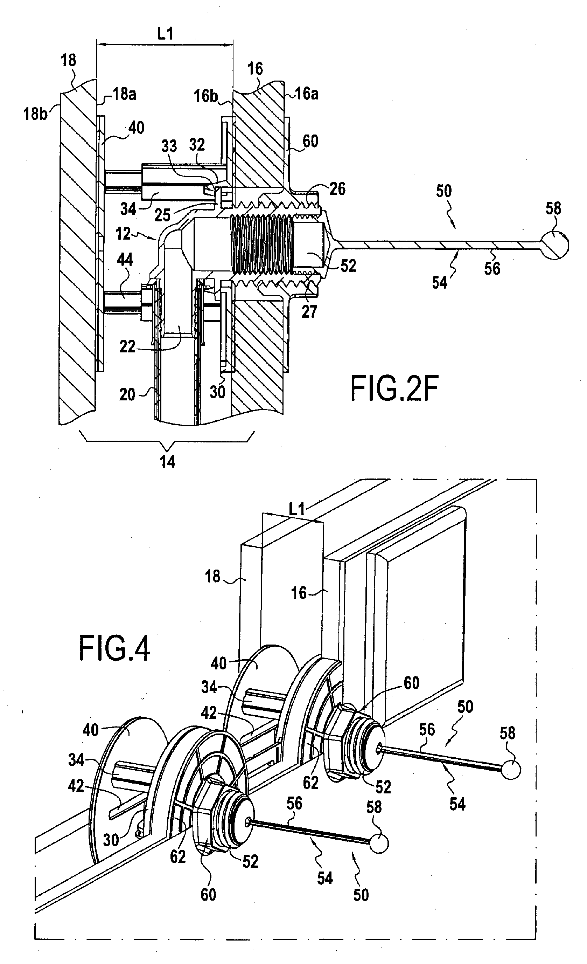

La figure 1 est une vue éclatée d'un dispositif 10 selon un premier mode de réalisation de l'invention, pour la fixation d'un raccord 12 sur une cloison creuse 14 telle qu'illustrée sur les figures 2E ou 2F, constituée d'une paroi avant 16 et d'une paroi arrière 18 espacés d'une distance L1.

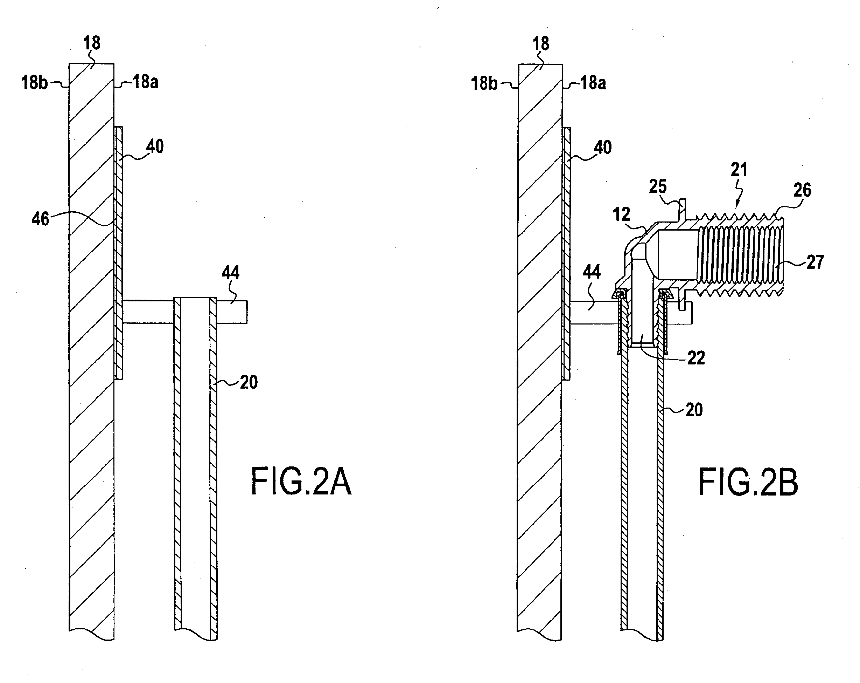

Dans l'exemple, le raccord de canalisation 12 est un raccord coudé, comprenant un embout arrière 22 destiné à être fixé à l'extrémité d'une conduite semi-rigide 20 (par exemple un tube multicouches ou une conduite en cuivre recuit, voir la figure 2A) et un embout avant 21 adapté à recevoir une robinetterie (non représentée).

L'embout avant 21 comporte un filetage externe 26, qui s'étend depuis son extrémité libre jusqu'à une collerette externe 25. Depuis son extrémité libre, s'étendant en direction de sa partie coudée, il comporte en outre un taraudage 27.

Les fonctions respectives du filetage 26 et du taraudage 27 ressortiront de la suite de la présente description.

Dans l'exemple, le dispositif de fixation 10 résulte de l'assemblage des éléments suivants : un élément de support 30 destiné à maintenir le raccord 12 ; un élément de base 40 adapté pour être fixé à la paroi arrière 18 de la cloison 14 ; un élément de préhension 50 adapté pour coopérer avec le taraudage 27 du raccord 12 ; et un écrou de renfort 60 adapté pour coopérer avec le filetage externe du raccord 12.

Dans l'exemple, l'élément de support 30 présente une forme de disque, de diamètre d1, muni d'un orifice central 31 de diamètre d2 et d'axe X-X'.

L'axe X-X' sera considéré, pour toute la suite, comme la direction axiale du dispositif de fixation 10.

L'élément de support 30 est, à terme, destiné à venir en appui contre la face arrière 16b de la paroi avant 16 de la cloison 14. Il comporte donc au moins une première face ou face avant 30a sensiblement plane, permettant d'assurer cet appui.

Pour améliorer l'adhérence avec la face arrière 16b de la paroi 16, l'élément de support 30 peut présenter des picots 38 sur sa face avant (voir la figure 1).

Selon un autre exemple de réalisation, un revêtement adhésif 36 peut être disposé sur la face avant 30a de l'élément de support, afin d'améliorer l'adhérence avec la face arrière 16b de la paroi 16.

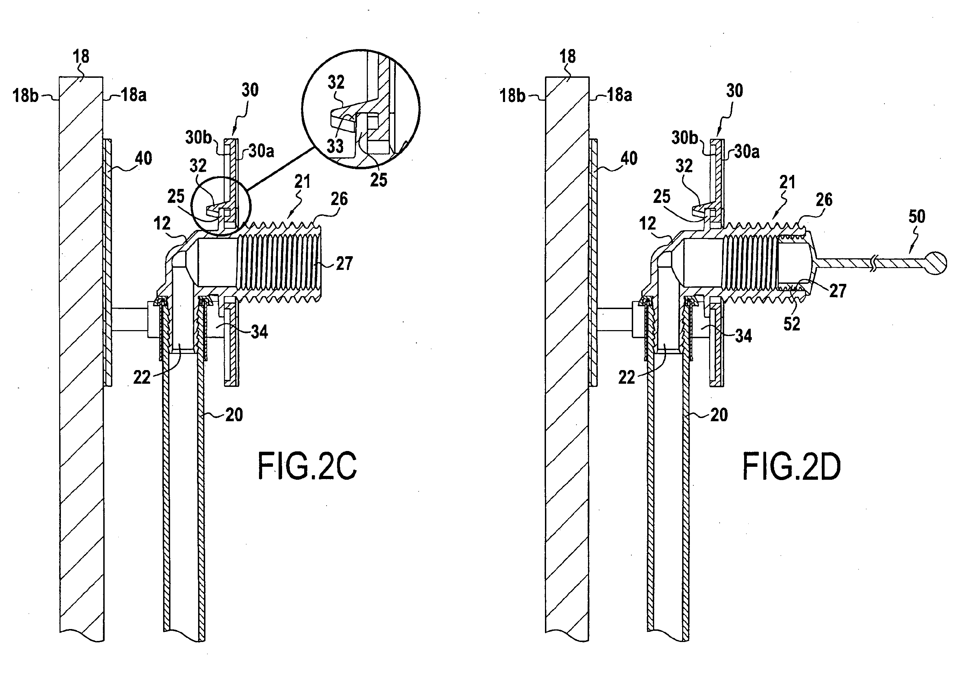

Comme illustré plus en détail sur la figure 2C, des languettes 32, disposées radialement autour de l'orifice central 31, font saillie depuis sa seconde face, ou face arrière 30b, opposée à la face 30a.

Les languettes 32 sont biseautées et terminées chacune par un cran d'arrêt 33. Elles sont, par ailleurs, élastiques.

Comme il ressortira de la suite de la description, les languettes 32 permettent le blocage en translation du raccord de canalisation 12 par rapport à l'élément de support 30.

L'élément de support 30 comporte en outre deux tiges creuses 34, qui font saillie de sa seconde face 30b en s'étendant dans la direction axiale X-X'.

Ces tiges 34 sont destinées à coopérer avec des tiges 44, de section complémentaire, de l'élément de base 40, lesquelles seront décrites dans la suite.

L'élément de base 40 présente une forme générale de disque, de diamètre d3, ici sensiblement égal au diamètre d1 de l'élément de support 30.

Dans l'exemple de la figure 1, il comporte, dans sa partie centrale, une fente oblongue 42 permettant l'introduction d'une vis (non représentée) et sa fixation à la paroi arrière 18.

Deux tiges 44 s'étendent depuis sa première face ou face avant 40a.

Dans l'exemple, leur diamètre externe est légèrement plus faible que le diamètre interne des tiges 34 de l'élément de support 30.

Plus généralement, les tiges 34, 44 de l'élément de support 30 et de l'élément de base 40 présentent des sections différentes adaptées pour s'engager l'une dans l'autre de sorte à former une glissière. L'intérêt d'une telle glissière ressortira de la suite de la présente description.

L'élément de préhension 50 permet la manipulation et le déplacement à distance du raccord de canalisation 12, par l'opérateur, à travers un trou 11 de la paroi avant 16 de la cloison 12. Il comprend un manchon fileté 52 apte à coopérer avec le taraudage 27 du raccord de canalisation 12, ainsi qu'une poignée 54 pour manipuler le manchon 52.

Dans l'exemple, la poignée 54 est une tige droite 56 s'étendant depuis une extrémité du manchon 52 et se terminant par une protubérance 58, par exemple sensiblement sphérique, permettant une meilleure prise en main par l'opérateur. Bien évidemment, la poignée 54 pourra présenter toute autre forme, sous réserve que l'encombrement radial de l'élément de préhension 50 reste dans une limite permettant son introduction à travers le trou 11 de la paroi.

L'écrou de renfort 60 est destiné à bloquer le dispositif 10 en position, à la fin du montage. Pour cela, il est adapté à coopérer avec le filetage externe 26 du raccord de canalisation 12.

Comme il sera décrit plus en détail dans la suite, son vissage sur l'embout avant 21 du raccord de canalisation 12 entraîne la prise en étau progressive de la paroi avant 16, entre l'élément de support 30 qui appuie contre sa face arrière, et une collerette externe 62 de l'écrou de renfort 60, adaptée pour venir en appui contre la face avant 16a de la paroi avant 16.

Le montage et la fixation du raccord de canalisation 12 sur la cloison creuse 14, au moyen du dispositif 10 tel que décrit précédemment, va à présent être décrit plus en détail en référence aux figures 2A à 2F.

Dans l'exemple, seule la paroi arrière 18 de la cloison 14 est installée initialement.

Dans une première étape de montage illustrée sur la figure 2A, l'élément de base 40 y est fixé, en regard de la conduite 20 et à la hauteur de l'emplacement souhaité pour le raccord de canalisation 12.

Si la paroi arrière 18 est constituée de briques, de parpaings, ou similaires, l'élément de base 40 peut être fixé au moyen de vis (non représentées) insérées dans sa fente oblongue 42 et vissées directement dans la paroi 18.

Si la paroi arrière 18 présente une surface suffisamment plane, l'élément de base 40 peut comporter, sur sa face arrière 40b, un revêtement adhésif 46 destiné à assurer sa fixation à la paroi 18 (voir la figure 1).

Selon un autre exemple de réalisation de l'invention, ces deux moyens de fixation peuvent également être combinés.

Dans l'exemple, la conduite 20 est semi-rigide, et s'étend sensiblement à la verticale. Si besoin, elle peut être coupée à hauteur de l'élément de base 40, une fois celui-ci positionné.

Dans une seconde étape de montage illustrée sur la figure 2B, la conduite 20 est fixée à l'embout arrière 22 du raccord de canalisation 12.

Puis, comme illustré sur la figure 2C, l'élément de support 30 est clipsé sur son embout avant 21.

L'élément de support 30 est enfilé, par son orifice central 31, sur l'embout avant 21 du raccord de canalisation 12, jusqu'à ce que les languettes élastiques 32 entrent en contact avec la collerette externe 25. Grâce à leur forme biseautée, les languettes 32 fléchissent légèrement en coopérant avec la collerette 25, puis reviennent dans leur position initiale pour bloquer en translation l'élément de support 30 par rapport au raccord de canalisation 12.

Dans le même temps, les tiges 34 de l'élément de support 30 sont montées sur celles, 44, de l'élément de base 40, de sorte qu'une liaison glissière est créée entre les deux éléments.

A l'issue de cette troisième étape, l'embout avant 21 du raccord de canalisation 12 fait saillie à l'avant de l'élément de support 30 et l'élément de support 30 est monté avec possibilité de translation par rapport à l'élément de base, dans la direction axiale X-X', grâce aux tiges 34, 44 et à la flexibilité relative de la conduite 20. Dans une quatrième étape de montage illustrée sur la figure 2D, l'élément de préhension 50 est fixé sur le raccord de canalisation 12, en étant vissé sur son taraudage 27.

Dans une cinquième étape, si ce n'est déjà fait, on réalise dans la paroi avant 16, par exemple à l'aide d'une scie cloche, un trou de passage 11 pour l'embout avant 21 du raccord de canalisation 12.

Puis on installe la paroi avant 16, en prenant soin d'enfiler la tige de l'élément de préhension 50 et l'embout avant 21 du raccord de canalisation 12 à travers le trou de passage 11 (voir la figure 2E).

Si besoin, et en particulier si l'embout avant 21 du raccord de canalisation 12 ne fait pas saillie à l'avant de la cloison 14, l'opérateur tire sur la poignée 54 de l'élément de préhension 50, en éloignement de la paroi 14, afin de le ramener vers lui. La conduite 20 présentant une flexibilité relative qui permet sa légère courbure en direction de la paroi avant, l'élément de support 30 peut coulisser légèrement par rapport à l'élément de base, jusqu'à arriver en butée contre la face arrière 16b de la paroi avant 16. Les tiges 34 de l'élément de support 30 et celles, 44, de l'élément de base 40 permettent ainsi au dispositif de s'adapter à la l'épaisseur de la cloison.

Dans une sixième étape illustrée sur la figure 2F, l'opérateur enfile l'écrou de renfort 60 sur la tige 56 de l'élément de préhension 50 puis, tout en tenant ladite tige 56 d'une main, visse l'écrou de renfort 60 sur la portion 21 du raccord de canalisation 12 faisant saillie depuis la face avant 16a de la cloison.

Après montage, la paroi avant 16 est prise en étau entre l'élément de support 30 et la collerette externe de l'écrou de renfort 60.

L'élément de préhension 50 peut alors être désengagé du raccord de canalisation 12 puis retiré.

Dans certains cas, notamment celui des robinets double vasque, il est nécessaire, lors de l'installation, de respecter l'horizontalité et un entraxe bien précis entre deux éléments de robinetterie adjacents.

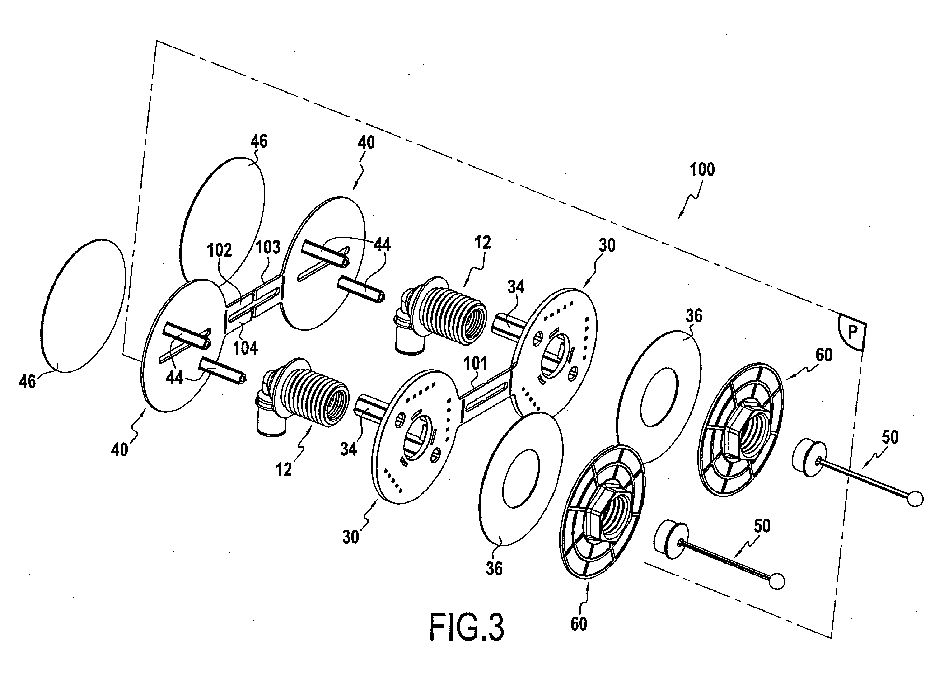

Sur les figures 3 et 4, on a représenté un dispositif de fixation 100 selon un second mode de réalisation de la présente invention, adapté aux multiples raccordements.

Les éléments identiques à ceux décrits en liaison avec le premier mode de réalisation comportent les mêmes références numériques que précédemment.

Dans l'exemple, le dispositif 100 comporte deux éléments de supports 30 reliés rigidement par une entretoise 101, deux éléments de base 40 reliés eux-aussi par une entretoise 102, deux éléments de préhension 50 et deux écrous de renfort 60. L'entraxe entre les éléments de support 30 et les éléments de base 40 est le même.

Le système est parfaitement symétrique par rapport à un plan P.

Les entretoises 101, 102, et particulièrement celle 102 reliant les deux éléments de base 40, présentent avantageusement au moins un rebord droit 103.

Ainsi, avant de fixer l'ensemble formé par les éléments de base 40 et l'entretoise 102 à la paroi arrière 18 de la cloison, l'opérateur peut utiliser un niveau à bulle en prenant le rebord 103 comme repère, et régler et/ou vérifier aisément l'horizontalité du dispositif 100.

Avantageusement, l'entretoise 102 reliant les éléments de base 40 comprend également un trou ou une fente oblongue 104, permettant l'introduction de vis (non représentées) pour la fixation de l'ensemble de base à la paroi arrière 18 de la cloison 14.

On rappelle que les éléments de support 30, auxquels les raccords 12 seront solidarisés, sont montés en regard des éléments de base 40 grâce à la liaison glissière axiale, formée par les tiges 34, 44.

Par conséquent, le réglage de l'horizontalité des éléments de base 40 garantit également celle des raccords de canalisation 12, et des robinetteries, en fin de montage.

Le dispositif 100 comprend deux ensembles de fixation comportant chacun un élément de base 40 et un élément de support 30, et est ainsi adapté au montage de deux robinetteries adjacentes. On comprend aisément que le dispositif selon l'invention pourra être décliné selon les besoins, avec un nombre n de tels ensembles placés en parallèles.

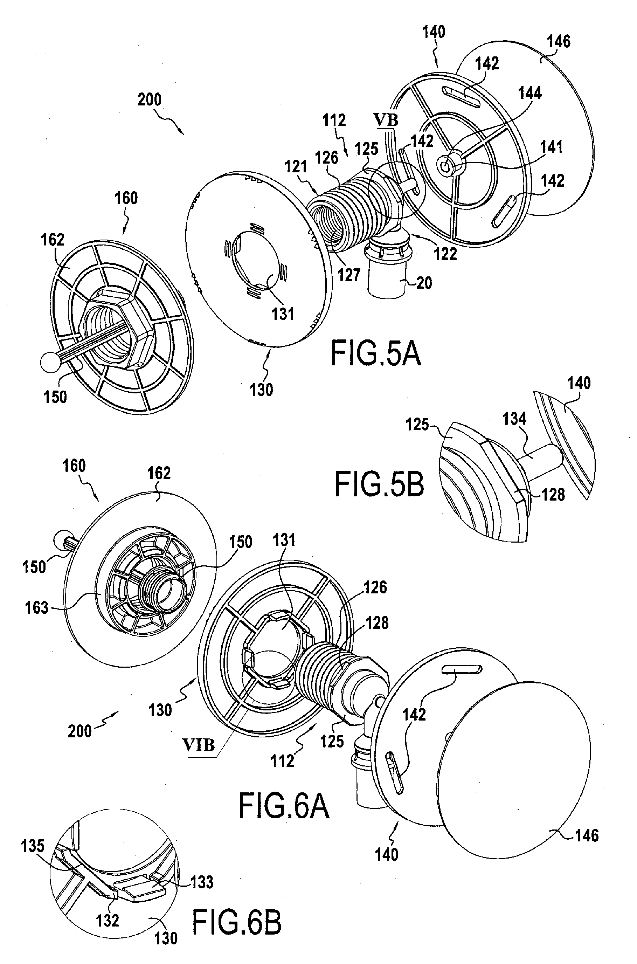

Sur les figures 5A, 5B, 6A, 6B, on a représenté un dispositif de fixation 200 selon un troisième mode de réalisation de la présente invention.

Tout comme dans le premier mode de réalisation décrit en détail ci-dessus, le dispositif 200 selon ce troisième mode comprend un élément de support 130 destiné à maintenir un raccord de canalisation 112 ; un élément de base 140 adapté pour être fixé à la paroi arrière de la cloison; un élément de préhension 150 adapté pour coopérer avec le taraudage du raccord 112 ; et un écrou de renfort 160 adapté pour coopérer avec le filetage externe du raccord 112.

Les caractéristiques de ces éléments étant, pour l'essentiel, bien connues de ce qui précède, seules les différences avec le premier mode de réalisation seront décrites plus en détail ci-dessous.

De la figure 6A, il ressort tout d'abord que l'élément de support 130 ne comporte aucune tige ou élément de coulissement apte à coopérer avec un élément complémentaire de l'élément de base 140, pour former une liaison glissière.

La fonction de coulissement entre l'élément de base 140 et l'ensemble formé par le raccord de canalisation 112 et l'élément de support 130 s'opère ici différemment du premier mode de réalisation.

Comme illustré sur figure 5A, l'élément de base 140 comporte, au niveau de sa partie centrale, un manchon creux 141 dont l'ouverture 144 débouche vers l'avant. Ce manchon creux 141 constitue, comme on le verra dans la suite, un moyen de guidage pour un coulisseau prévu sur le raccord de canalisation 112.

Selon ce mode de réalisation, le raccord de canalisation 112 forme en effet partie intégrante du dispositif de fixation 200.

Comme illustré sur la figure 5A, il est en tout point identique au raccord 12 déjà décrit précédemment, hormis deux particularités décrites ci-après.

Du côté opposé à son embout avant 121, le raccord de canalisation 112 comporte un ergot 134, ici sensiblement aligné avec l'axe de l'embout 121. Cet ergot 134 présente des dimensions qui permettent son insertion et son coulissement à l'intérieur du manchon 141. Il forme ainsi un coulisseau assurant une liaison glissière entre le raccord de canalisation 112 et l'élément de base 140.

Sur la figure 5A, on peut voir également que la collerette externe 125 du raccord 121 comporte des méplats 128 régulièrement répartis à sa périphérie. Leur fonction ressortira de ce qui suit :
Comme dans le premier mode de réalisation, l'élément de support 130 comporte des moyens d'adaptation pour le raccord de canalisation. Ces moyens d'adaptation comprennent un orifice central 131 et des languettes 132, disposées radialement autour de l'orifice central 131 et faisant saillie depuis la face arrière de l'élément de support 130.

Les languettes 132 sont biseautées et terminées chacune par un cran d'arrêt 133. Elles sont, par ailleurs, élastiques. En coopérant avec la collerette externe du raccord de canalisation 112, ces languettes 132 permettent, comme dans le premier mode de réalisation, le blocage en translation du raccord de canalisation 112 par rapport à l'élément de support 130.

L'élément de support 130 illustré sur les figures 5A à 6B permet, en plus de bloquer le raccord 112 en translation, de le bloquer en rotation. Pour cela, l'élément de support 130 comporte, sur sa face arrière, autour de l'orifice central 131, des nervures rectilignes 135. Lorsque le raccord de canalisation 112 est fixé sur l'élément de support 130, les méplats 128 du raccord de canalisation 112 coopèrent avec les nervures rectilignes 135 de l'élément de support 130 pour bloquer le pivotement relatif entre ces deux pièces.

L'écrou de renfort 160 diffère, lui-aussi, de celui décrit précédemment. Outre sa collerette externe 162 destinée à venir en appui contre la face avant de la paroi avant, l'écrou de renfort comporte également, de son côté dirigé vers la paroi avant lors de l'opération de montage, et s'étendant depuis la collerette externe 162, une douille 163 de diamètre externe choisi de préférence très légèrement inférieur au diamètre interne du trou de la cloison. On comprend qu'en se substituant à la portion de cloison retirée lors du perçage du trou, la douille constitue un moyen de renfort de la cloison, une fois le dispositif monté.

Les étapes de montage du dispositif selon ce troisième mode de réalisation de l'invention sont très semblables à celles décrites précédemment en liaison avec les figures 2A à 2F.

La seule modification est liée aux moyens de coulissement différents dans ce mode de réalisation. Le raccord de canalisation 112 est monté sur l'élément de base 140 avec possibilité de translation (et non plus à l'élément de support 130 comme c'était le cas dans le premier mode de réalisation).

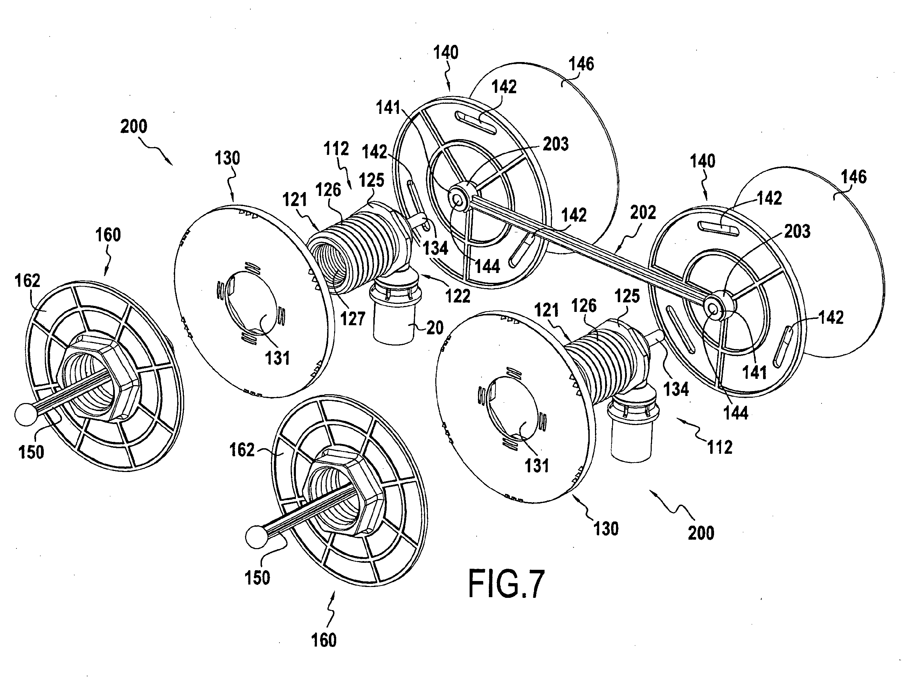

Sur la figure 7, on a représenté un mode de mise en oeuvre particulièrement avantageux du dispositif de fixation 200 selon le troisième mode de réalisation de l'invention.

Dans le cas où deux robinetteries adjacentes doivent être montées, il est nécessaire de pouvoir ajuster très précisément l'entraxe entre les canalisations.

Pour ce faire, une tige de raccordement 202 telle qu'illustrée sur la figure 7, est fixée de manière amovible sur deux éléments de base 140.

Dans l'exemple, la tige de raccordement 202 est munie, à chacune de ses extrémités, d'un moyen de clipsage 203, adapté à se clipser sur le manchon 141 de l'un des éléments de base 140.

Une fois fixée aux éléments de base, la tige 202 forme avec ceux-ci un ensemble solidaire dans lequel l'écartement entre les deux éléments de base 140 est déterminé. On comprend aisément que l'entraxe entre les deux éléments de support 130 correspondants et, de fait, entre les raccords de canalisation devant y être fixés, sera également déterminé par la longueur de la tige 202 reliant les éléments de base 140 correspondants.

## Revendications

1. Dispositif (10, 100) pour la fixation d'au moins un raccord de canalisation (12) sur une cloison creuse (14) comprenant une paroi avant (16) et une paroi arrière (18) espacées l'une de l'autre, **caractérisé en ce qu'**il comporte :
- au moins un élément de base (40) comportant des moyens de fixation (42, 46) pour sa fixation sur la paroi arrière (18),
- au moins un élément de support (30) comportant des moyens d'adaptation (31, 32, 33) pour le raccord de canalisation (12), et adapté pour être monté avec possibilité de translation par rapport à l'élément de base (40), l'élément de base et l'élément de support coopérant par une glissière, et pour venir en appui contre la face arrière (16b) de la paroi avant (16),
- au moins un élément de préhension (50) adapté pour venir se fixer au raccord de canalisation (12), dans le prolongement de son embouchure, de façon amovible, et
- au moins un écrou de renfort (60) adapté pour être vissé à une extrémité du raccord de canalisation (12) qui traverse un trou (11) de la paroi avant (16), et pour venir en appui contre la face avant (16a) de la paroi avant (16), ce par quoi la paroi avant (16) est prise en étau entre l'élément de support (30) et l'écrou de renfort (60).

2. Dispositif de fixation (200) pour la fixation d'au moins un raccord de canalisation (112) sur une cloison creuse (14) comprenant une paroi avant (16) et une paroi arrière (18) espacées l'une de l'autre, **caractérisé en ce qu'**il comporte :
- un raccord de canalisation (112) comprenant un embout avant (121) muni d'un filetage externe (126) et d'un filetage interne (127), un embout arrière (122) adapté à recevoir l'extrémité d'une conduite (20), et un ergot (134) faisant saillie dans une direction opposée à son embout avant (121),
- au moins un élément de base (140) comportant des moyens de fixation (142, 146) pour sa fixation sur la paroi arrière (18), et des moyens de guidage (144) adaptés à coopérer avec l'ergot (134) du raccord de canalisation (112) pour former une liaison glissière,
- au moins un élément de support (130) comportant des moyens d'adaptation (131, 132, 133, 135) pour le raccord de canalisation (112), et adapté pour venir en appui contre la face arrière (16b) de la paroi avant (16),
- au moins un élément de préhension (150) adapté pour venir se fixer au raccord de canalisation (112), dans le prolongement de son embouchure, de façon amovible, et
- au moins un écrou de renfort (160) adapté pour être vissé à une extrémité du raccord de canalisation (112) qui traverse un trou (11) de la paroi avant (16), et pour venir en appui contre la face avant (16a) de la paroi avant (16), ce par quoi la paroi avant (16) est prise en étau entre l'élément de support (130) et l'écrou de renfort (160).

3. Dispositif de fixation (10, 100) selon la revendication 1, dans lequel l'un parmi l'élément de base (40) et l'élément de support (30) comprend une première tige creuse (34) et l'autre parmi l'élément de base (40) et l'élément de support (30) comprend une seconde tige (44) adaptée à s'engager à coulissement à l'intérieur de ladite première tige.

4. Dispositif de fixation (10, 100, 200) selon l'une quelconque des revendications 1 à 3, dans lequel les moyens de fixation de l'élément de base (40, 140) comprennent au moins une fente oblongue (42, 142) destinée à recevoir une vis.

5. Dispositif de fixation (10, 100, 200) selon l'une quelconque des revendications 1 à 4, dans lequel les moyens de fixation de l'élément de base (40, 140) comprennent des moyens adhésifs (46, 146).

6. Dispositif de fixation (10, 100, 200) selon l'une quelconque des revendications 1 à 5, dans lequel les moyens d'adaptation (31, 32, 33 ; 131, 132, 133, 135) comprennent des moyens de blocage en translation (32, 33 ; 132, 133) du raccord de canalisation (12, 112) par rapport à l'élément de support (30, 130).

7. Dispositif de fixation (200) selon l'une quelconque des revendications 1 à 6, dans lequel les moyens d'adaptation (31, 32, 33 ; 131, 132, 133, 135) comprennent des moyens de blocage en rotation (135) du raccord de canalisation par rapport à l'élément de support (130).

8. Dispositif de fixation (10, 100, 200) selon l'une quelconque des revendications 1 à 7, dans lequel l'élément de préhension (50, 150) comprend un manchon fileté (52) adapté pour coopérer avec un taraudage (27, 127) du raccord de canalisation (12, 112), et une poignée (54) pour manipuler ledit manchon (52).

9. Dispositif de fixation (10, 100, 200) selon l'une quelconque des revendications 1 à 8, dans lequel l'écrou de renfort (60, 160) comprend une collerette externe (62, 162) pour venir en appui contre la face avant (16a) de la paroi avant (16).

10. Dispositif de fixation (200) selon l'une quelconque des revendications 1 à 9, dans lequel l'écrou de renfort (160) comporte une douille (163) adaptée à être introduite dans le trou de la cloison et à coopérer avec les parois internes du trou, ce par quoi le trou est renforcé.

11. Dispositif de fixation (100) selon l'une quelconque des revendications 1 à 10, comprenant au moins deux éléments de base (40), rigidement liés l'un à l'autre de façon à conserver entre eux un écartement prédéterminé.

12. Dispositif de fixation (200) selon l'une quelconque des revendications 1 à 10, comprenant au moins deux éléments de base (140) et au moins une tige de raccordement (202) adaptée à être fixée de manière amovible sur chacun des deux éléments de base (140), la tige (202) et les éléments de base (140) formant alors un ensemble solidaire dans lequel l'écartement entre les éléments de base (140) est prédéterminé.

13. Procédé de fixation d'au moins un raccord de canalisation (12, 112) sur une cloison creuse (14) comprenant une paroi avant (16) et une paroi arrière (18), au moyen d'un dispositif selon l'une quelconque des revendications 1 à 12, **caractérisé en ce qu'**il comprend les étapes suivantes :
a) on fixe l'élément de base (40, 140) sur la paroi arrière (18),
b) on monte sur l'élément de base (40, 140) l'ensemble formé par le raccord de canalisation (12, 112) et l'élément de support (30, 130),
c) on fixe l'élément de préhension (50, 150) sur le raccord de canalisation (12, 112), dans le prolongement de son embouchure,
d) on installe la paroi avant (16) ;
e) on visse l'écrou de renfort (60, 160) sur une extrémité du raccord de canalisation qui traverse le trou de la paroi avant, jusqu'à ce que la paroi avant soit prise en étau entre l'élément de support (30, 130) et l'écrou de renfort (60, 160).

14. Procédé de fixation selon la revendication 13, dans lequel, après avoir installé la paroi avant et avant de visser l'écrou de renfort sur l'extrémité du raccord de canalisation, on tire sur l'élément de préhension (50, 150) pour déplacer l'élément de support (30, 130) par rapport à l'élément de base et l'amener en appui contre la face arrière de la paroi avant (16), de sorte que l'extrémité du raccord de canalisation traverse un trou de la paroi avant.

15. Procédé de fixation selon la revendication 13 ou 14, dans lequel au cours de l'étape b), dans cet ordre ou inversement, on fait coopérer l'ergot (134) du raccord de canalisation (112) avec les moyens de guidage (144) de l'élément de base (140) et on fixe le raccord de canalisation (112) sur l'élément de support (140).

16. Procédé de fixation selon la revendication 13 ou 14, dans lequel, au cours de l'étape b), dans cet ordre ou inversement, on monte l'élément de support (30) sur l'élément de base (40) avec possibilité de translation, et on fixe le raccord de canalisation (12) sur l'élément de support (30).

## Patentansprüche

1. Vorrichtung (10, 100) für die Befestigung wenigstens eines Rohrleitungsanschlussstutzens (12) an einer hohlen Trennwand (14), die eine vordere Wand (16) und eine hintere Wand (18), welche voneinander beabstandet sind, umfasst, **dadurch gekennzeichnet, dass** sie umfasst:
- wenigstens ein Basiselement (40), das Befestigungsmittel (42, 46) für seine Befestigung an der hinteren Wand (18) umfasst,
- wenigstens ein Tragelement (30), das Anpassungsmittel (31, 32, 33) für den Rohrleitungsanschlussstutzen (12) umfasst und das dazu ausgelegt ist, mit Verschiebemöglichkeit gegenüber dem Basiselement (40) angebracht zu werden, wobei das Basiselement und das Tragelement über eine Gleitschiene zusammenwirken, und an der Rückseite (16b) der vorderen Wand (16) in Anlage zu gelangen,
- wenigstens ein Greifelement (50), das dazu ausgelegt ist, an dem Rohrleitungsanschlussstutzen (12), in der Verlängerung seiner Öffnung, lösbar befestigt zu werden, und
- wenigstens eine Verstärkungsmutter (60), die dazu ausgelegt ist, an ein Ende des Rohrleitungsanschlussstutzens (12), das ein Loch (11) der vorderen Wand (16) durchgreift, geschraubt zu werden und an der Vorderseite (16a) der vorderen Wand (16) in Anlage zu gelangen, wodurch die vordere Wand (16) zwischen dem Tragelement (30) und der Verstärkungsmutter (60) eingeklemmt wird.

2. Befestigungsvorrichtung (200) für die Befestigung wenigstens eines Rohrleitungsanschlussstutzens (112) an einer hohlen Trennwand (14), die eine vordere Wand (16) und eine hintere Wand (18), welche voneinander beabstandet sind, umfasst, **dadurch gekennzeichnet, dass** sie umfasst:
- einen Rohrleitungsanschlussstutzen (112), der ein vorderes Anschlussstück (121), welches mit einem Außengewinde (126) und mit einem Innengewinde (127) versehen ist, ein hinteres Anschlussstück (122), welches dazu ausgelegt ist, das Ende einer Leitung (20) aufzunehmen, und einen Stift (134), welcher in einer zu seinem vorderen Anschlussstück (121) entgegengesetzten Richtung vorspringt, umfasst,
- wenigstens ein Basiselement (140), das Befestigungsmittel (142, 146) für seine Befestigung an der hinteren Wand (18) sowie Führungsmittel (144) umfasst, die dazu ausgelegt sind, mit dem Stift (134) des Rohrleitungsanschlussstutzens (112) zusammenzuwirken, um eine Gleitschienenverbindung zu bilden,
- wenigstens ein Tragelement (130), das Anpassungsmittel (131, 132, 133, 135) für den Rohrleitungsanschlussstutzen (112) umfasst und das dazu ausgelegt ist, an der Rückseite (16b) der vorderen Wand (16) in Anlage zu gelangen,
- wenigstens ein Greifmittel (150), das dazu ausgelegt ist, an dem Rohrleitungsanschlussstutzen (112), in der Verlängerung seiner Öffnung, lösbar befestigt zu werden, und
- wenigstens eine Verstärkungsmutter (160), die dazu ausgelegt ist, an ein Ende des Rohrleitungsanschlussstutzens (112), das ein Loch (11) der vorderen Wand (16) durchgreift, geschraubt zu werden und an der Vorderseite (16a) der vorderen Wand (16) in Anlage zu gelangen, wodurch die vordere Wand (16) zwischen dem Tragelement (130) und der Verstärkungsmutter (160) eingeklemmt wird.

3. Befestigungsvorrichtung (10, 100) nach Anspruch 1, wobei das eine aus dem Basiselement (40) und dem Tragelement (30) eine erste hohle Stange (34) umfasst und das andere aus dem Basiselement (40) und dem Tragelement (30) eine zweite Stange (44) umfasst, die dazu ausgelegt ist, in die erste Stange gleitend einzugreifen.

4. Befestigungsvorrichtung (10, 100, 200) nach einem der Ansprüche 1 bis 3, wobei die Befestigungsmittel des Basiselements (40, 140) wenigstens einen länglichen Schlitz (42, 142) umfassen, der dazu bestimmt ist, eine Schraube aufzunehmen.

5. Befestigungsvorrichtung (10, 100, 200) nach einem der Ansprüche 1 bis 4, wobei die Befestigungsmittel des Basiselements (40, 140) Haftmittel (46, 146) umfassen.

6. Befestigungsvorrichtung (10, 100, 200) nach einem der Ansprüche 1 bis 5, wobei die Anpassungsmittel (31, 32, 33; 131, 132, 133, 135) Mittel zum Festlegen gegen ein Verschieben (32, 33; 132, 133) des Rohrleitungsanschlussstutzens (12, 112) gegenüber dem Tragelement (30, 130) umfassen.

7. Befestigungsvorrichtung (200) nach einem der Ansprüche 1 bis 6, wobei die Anpassungsmittel (31, 32, 33; 131, 132, 133, 135) Mittel zum Festlegen gegen ein Drehen (135) des Rohrleitungsanschlussstutzens gegenüber dem Tragelement (130) umfassen.

8. Befestigungsvorrichtung (10, 100, 200) nach einem der Ansprüche 1 bis 7, wobei das Greifelement (50, 150) eine Gewindemuffe (52), welche dazu ausgelegt ist, mit einem Innengewinde (27, 127) des Rohrleitungsanschlussstutzens (12, 112) zusammenzuwirken, sowie einen Griff (54) zum Bedienen der Muffe (52) umfasst.

9. Befestigungsvorrichtung (10, 100, 200) nach einem der Ansprüche 1 bis 8, wobei die Verstärkungsmutter (60, 160) einen äußeren Kragen (62, 162) umfasst, um an der Vorderseite (16a) der vorderen Wand (16) in Anlage zu gelangen.

10. Befestigungsvorrichtung (200) nach einem der Ansprüche 1 bis 9, wobei die Verstärkungsmutter (160) eine Hülse (163) umfasst, die dazu ausgelegt ist, in das Loch der Trennwand eingeführt zu werden und mit den Innenwänden des Loches zusammenzuwirken, wodurch das Loch verstärkt wird.

11. Befestigungsvorrichtung (100) nach einem der Ansprüche 1 bis 10, die wenigstens zwei Basiselemente (40) umfasst, welche starr miteinander verbunden sind, um zwischen ihnen einen vorbestimmten Abstand zu bewahren.

12. Befestigungsvorrichtung (200) nach einem der Ansprüche 1 bis 10, die wenigstens zwei Basiselemente (140) und wenigstens eine Verbindungsstange (202), welche dazu ausgelegt ist, an jedem der beiden Basiselemente (140) lösbar befestigt zu werden, umfasst, wobei die Stange (202) und die Basiselemente (140) dann eine fest verbundene Anordnung bilden, bei der der Abstand zwischen den Basiselementen (140) vorbestimmt ist.

13. Verfahren zur Befestigung wenigstens eines Rohrleitungsanschlussstutzens (12, 112) an einer eine vordere Wand (16) und eine hintere Wand (18) umfassenden hohlen Trennwand (14) mittels einer Vorrichtung nach einem der Ansprüche 1 bis 12, **dadurch gekennzeichnet, dass** es die folgenden Schritte umfasst:
a) das Basiselement (40, 140) wird an der hinteren Wand (18) befestigt,
b) an dem Basiselement (40, 140) wird die durch den Rohrleitungsanschlussstutzen (12, 112) und das Tragelement (30, 130) gebildete Anordnung angebracht,
c) das Greifelement (50, 150) wird an dem Rohrleitungsanschlussstutzen (12, 112) in der Verlängerung seiner Öffnung befestigt,
d) die vordere Wand (16) wird installiert,
e) die Verstärkungsmutter (60, 160) wird an ein Ende des Rohrleitungsanschlussstutzens, welches das Loch der vorderen Wand durchgreift, soweit festgeschraubt, bis die vordere Wand zwischen dem Tragelement (30, 130) und der Verstärkungsmutter (60, 160) eingeklemmt ist.

14. Befestigungsverfahren nach Anspruch 13, wobei, nachdem die vordere Wand installiert worden ist und bevor die Verstärkungsmutter an das Ende des Rohrleitungsanschlussstutzens geschraubt wird, an dem Greifelement (50, 150) gezogen wird, um das Tragelement (30, 130) gegenüber dem Basiselement zu bewegen und um es an der Rückseite der vorderen Wand (16) in Anlage zu bringen, so dass das Ende des Rohrleitungsanschlussstutzens ein Loch der vorderen Wand durchgreift.

15. Befestigungsverfahren nach Anspruch 13 oder 14, wobei man im Laufe des Schrittes b), in dieser Reihenfolge oder umgekehrt, den Stift (134) des Rohrleitungsanschlussstutzens (112) mit den Führungsmitteln (144) des Basiselements (140) zusammenwirken lässt und den Rohrleitungsanschlussstutzen (112) an dem Tragelement (140) befestigt.

16. Befestigungsverfahren nach Anspruch 13 oder 14, wobei im Laufe des Schrittes b), in dieser Reihenfolge oder umgekehrt, das Tragelement (30) an dem Basiselement (40) mit Verschiebemöglichkeit angebracht wird und der Rohrleitungsanschlussstutzen (12) an dem Tragelement (30) befestigt wird.

## Claims

1. A fastener device (10, 100) for fastening at least one pipe coupling (12) to a hollow partition (14) comprising a front wall (16) and a rear wall (18) spaced apart from each other, the device being **characterized in that** it comprises:
· at least one base element (40) including fastener means (42, 46) for fastening it to the rear wall (18);
· at least one support element (30) including adjustment means (31, 32, 33) for the pipe coupling (12), the support element being adapted to be mounted with the possibility of moving in translation relative to the base element (40), the base element and the support element co-operating by means of a slideway, the support element being further adapted to press against the rear face (16b) of the front wall (16);
· at least one grip element (50) adapted to be fastened to the pipe coupling (12) in releasable manner to project from its outlet; and
· at least one reinforcing nut (60) adapted to be screwed onto an end of the pipe coupling (12) that passes through a hole (11) in the front wall (16), and to press against the front face (16a) of the front wall (16), thereby clamping the front wall (16) between the support element (30) and the reinforcing nut (60).

2. A fastener device (200) for fastening at least one pipe coupling (112) to a hollow partition (14) comprising a front wall (16) and a rear wall (18) that are spaced from each other, the device being **characterized in that** it comprises:
· a pipe coupling (112) having a front endpiece (121) with an outside thread (126) and an inside thread (127), a rear endpiece (122) adapted to receive the end of a pipe (20), and a stud (134) projecting away from its front endpiece (121);
. at least one base element (140) including fastener means (142, 146) for fastening it to the rear wall (18), and guide means (144) adapted to co-operate with the stud (134) of the pipe coupling (112) to form a slideway connection;
· at least one support element (130) including adjustment means (131, 132, 133, 135) for the pipe coupling (112), and adapted to press against the rear face (16b) of the front wall (16);
· at least one grip element (150) adapted to be fastened to the pipe coupling (112) in releasable manner to project from its outlet; and
· at least one reinforcing nut (160) adapted to be screwed onto an end of the pipe coupling (112) that passes through a hole (11) in the front wall (16), and to press against the front face (16a) of the front wall (16) thereby clamping the front wall (16) between the support element (130) and the reinforcing nut (160).

3. A fastener device (10, 100) according to claim 1, wherein one of the base elements (40) and the support element (30) has a first hollow rod (34) and the other of the base elements (40) and the support element (30) has a second rod (44) adapted to be slidably engaged inside said first rod.

4. A fastener device (10, 100, 200) according to any one of claims 1 to 3, wherein the fastener means of the base element (40, 140) include at least one oblong slot (42, 142) for receiving a screw.

5. A fastener device (10, 100, 200) according to any one of claims 1 to 4, wherein the fastener means of the base element (40, 140) comprise adhesive means (46, 146).

6. A fastener device (10, 100, 200) according to any one of claims 1 to 5, wherein the adjustment means (31, 32, 33; 131, 132, 133, 135) comprise means (32, 33; 132, 133) for preventing the pipe coupling (12, 112) from moving in translation relative to the support element (30, 130).

7. A fastener device (200) according to any one of claims 1 to 6, wherein the adjustment means (31, 32, 33; 131, 132, 133, 135) comprise means (135) for preventing the pipe coupling from moving in rotation relative to the support element (130).

8. A fastener device (10, 100, 200) according to any one of claims 1 to 7, wherein the grip element (50, 150) comprises a threaded sleeve (52) adapted to co-operate with tapping (27, 127) in the pipe coupling (12, 112), and a handle (54) for manipulating said sleeve (52).

9. A fastener device (10, 100, 200) according to any one of claims 1 to 8, wherein the reinforcing nut (60, 160) includes an outer collar (62, 162) for pressing against the front face (16a) of the front wall (16).

10. A fastener device (200) according to any one of claims 1 to 9, wherein the reinforcing nut (160) includes a bushing (163) adapted to be inserted in the hole in the partition and to co-operate with the inside walls of the hole, thereby reinforcing the hole.

11. A fastener device (100) according to any one of claims 1 to 10, including at least two base elements (40) rigidly connected to each other so as to maintain a predetermined spacing between them.

12. A fastener device (200) according to any one of claims 1 to 10, including at least two base elements (140) and at least one connection rod (202) adapted to be releasably fastened to each of the two base elements (140), the rod (202) and the base elements (140) then forming a rigid assembly in which the spacing between the base elements (140) is predetermined.

13. A fastening method for fastening at least one pipe coupling (12, 112) to a hollow partition (14) comprising a front wall (16) and a rear wall (18), the method using a device according to any one of claims 1 to 12 and being **characterized in that** it comprises the following steps:
a) fastening the base element (40, 140) to the rear wall (18);
b) mounting the assembly formed by the pipe coupling (12, 112) and the support element (30, 130) on the base element (40, 140);
c) fastening the grip element (50, 150) to the pipe coupling (12, 112) so as to project from its outlet;
d) installing the front wall (16); and
e) screwing the reinforcing nut (60, 160) onto an end of the pipe coupling that passes thorough the hole in the front wall, until the front wall is clamped between the support element (30, 130) and the reinforcing nut (60, 160).

14. A fastening method according to claim 13, wherein, once the front wall has been installed and before the reinforcing nut has been screwed onto the end of the pipe coupling, the grip element (50, 150) is pulled so as to move the support element (30, 130) relative to the base element and bring it to press against the rear face of the front wall (16), in such a manner that the end of the pipe coupling passes through a hole in the front wall.

15. A fastening method according to claim 13 or claim 14, wherein, during step b), the following steps are performed in this order or in the opposite order: causing the stud (134) of the pipe coupling (112) to co-operate with the guide means (144) of the base element (140); and fastening the pipe coupling (112) to the support element (140) .

16. A fastening method according to claim 13 or claim 14, wherein, during step b), the following steps are performed in this order or in the opposite order: mounting the support element (30) on the base element (40) with the possibility of moving in translation; and fastening the pipe coupling (12) to the support element (30).
